# EUROPEAN PATENT APPLICATION

(11) **EP 2 703 800 A1**
(43) Date of publication of application: **05.03.2014**
(21) Application number: 13425116.4
(22) Date of filing: 21.08.2013
(51) Int. Cl.: G01M 3/28, G01M 3/18, E03B 7/07, F17D 5/02

(54) **Self-powered device for detecting water leakages in the pipelines of civil and industrial plants**

(30) Priority: 30.08.2012 IT VI20120214
(71) Applicant: Gilioli, Marco, 40053 Bazzano (BO) (IT); Mattarozzi, Stefano, Savignano S.P. (MO) (IT)
(72) Inventor: Gilioli, Marco, 40053 Bazzano (BO) (IT); Mattarozzi, Stefano, Savignano S.P. (MO) (IT)
(74) Representative: Burchielli, Riccardo

(57) **Abstract**

A self-powered device for detecting water leakages in the pipelines of civil and industrial plants comprising a recharging magnetic element (12), which is inserted inside a portion of a conduit or pipeline (13) located downstream of a water meter (10) of a civil or industrial waterworks and connected to a user (11) of the plant, such as a home unit or a control unit; said water meter (10) is traversed by a first input water flow (F1) and by a second output water flow (F2) and the recharging magnetic element (12) is connected to a coil (14) from which an electrical signal (S1), which is generated by induction, is taken, said electrical signal (S1) being used to indicate the presence of said second water flow (F2) exiting the water meter (10).

## Description

The present invention generally relates to a self-powered device for detecting water leakage in the pipelines of civil and industrial plants.

More particularly, the invention relates to a self-powered device suitable for detecting water leakages in the pipelines of civil and industrial plants, as well as for measuring the actual water consumptions of the users; in the latter case, the device is suitably equipped with a sensor to measure the water flow rate.

It is well known that water constitutes a primary asset of fundamental importance and that therefore it is necessary to limit as much as possible the waste of water.

However, in civil and industrial water supply plants, water losses due to failures, malfunctions and/or deterioration of the pipelines occur.

These losses firstly cause a not negligible waste of water, which therefore cannot be used, and, moreover, a consistent economic damage both for the user, who must bear the costs, and for the service provider, to which is refunded only a part of the lost water and/or must incur in expensive legal disputes with users.

In order to avoid these drawbacks, measuring instruments for detecting leaks in the pipelines on the basis of the sound, taking into account the frequencies that said pipelines give out in case they are damaged, are also known.

Other instruments provide for using a plurality of sensors which are positioned along the water network to be monitored and which are connected to a central control unit which receives and processes the data sent by each single sensor.

However, said known instruments are mainly used to locate leakages once the leak is already present and has already caused some damages.

Moreover, said instruments are particularly expensive and therefore they are not used in civil and industrial plants; moreover, turbulences inside the pipelines can activate said instruments, thus negatively affecting their proper operation.

Among other things, some of the above instruments can only used in water networks of civil and industrial plants but they cannot be used directly in said civil and industrial plants, since the technology appears to be substantially expensive and difficult to handle, therefore it cannot be used in water systems of limited size, such as civil and industrial plants. Within the above mentioned requirements, therefore, an object of the present invention is to obviate the above drawbacks of the prior art and, in particular, to provide a self-powered device for detecting water leakages in the pipelines of civil and industrial plants, which allows to quickly and safely detect the presence of leaks in the pipelines of said plants and which is reliable, effective and economical, so as to reduce the subsequent economical, structural and environmental damages.

Another object of the present invention is to provide a self-powered device for detecting water leakages in the pipelines of civil and industrial plants, which allows tracking the water network automatically and instantly.

Another object of the invention is to provide a self-powered device for detecting water leakages in the pipelines of civil and industrial plants, which can be simply and quickly installed, both in existing civil and industrial plants and in new plants.

Further object of the invention is to provide a self-powered device for detecting water leakages in the pipelines of civil and industrial plants, which is also able to measure the water consumption of the plant and which can also be integrated with an anti-freezing system.

These and other objects are achieved, according to the present invention, by a self-powered device for detecting water leakages in the pipelines of civil and industrial plants according to the appended claim 1; other detailed features of the device are described in the dependent claims.

The detecting device according to the invention advantageously allows to detect water leakages in the pipelines through the analysis of the water consumption data; practically, said device sends an alarm signal when a water flow which flows continuously for a time period longer than a prefixed threshold is detected.

Furthermore, the detecting device can have a sensor to measure the water flow, which firstly allows to detect data related to the actual water consumption and also to inform the user about atypical consumptions and therefore about leakages in the pipeline.

The stored energy can also be used to heat the water meter of the plant, when the environment temperature is too low for a long time period, in order to avoid possible freezing of said counter, thus resulting in serious damages of the pipeline and of the whole water system.

These and other objects and advantages will appear to a greater extent from the description which follows, related to a preferred embodiment of the self-powered device for detecting water leakages in the pipelines of civil and industrial plants, according to the present invention, which is provided for a preferred and non-limiting example, and according to the attached drawings, in which:
- figure 1 shows a block diagram of a first embodiment of the device for detecting water leakages in the pipelines of civil and industrial plants, according to the present invention,
- figure 2 shows a block diagram of a second embodiment of the device for detecting water leakages in the pipelines of civil and industrial plants, according to the present invention, and
- figure 3 shows a block diagram of a third embodiment of the device for detecting water leakages in the pipelines of civil and industrial plants, according to the present invention.

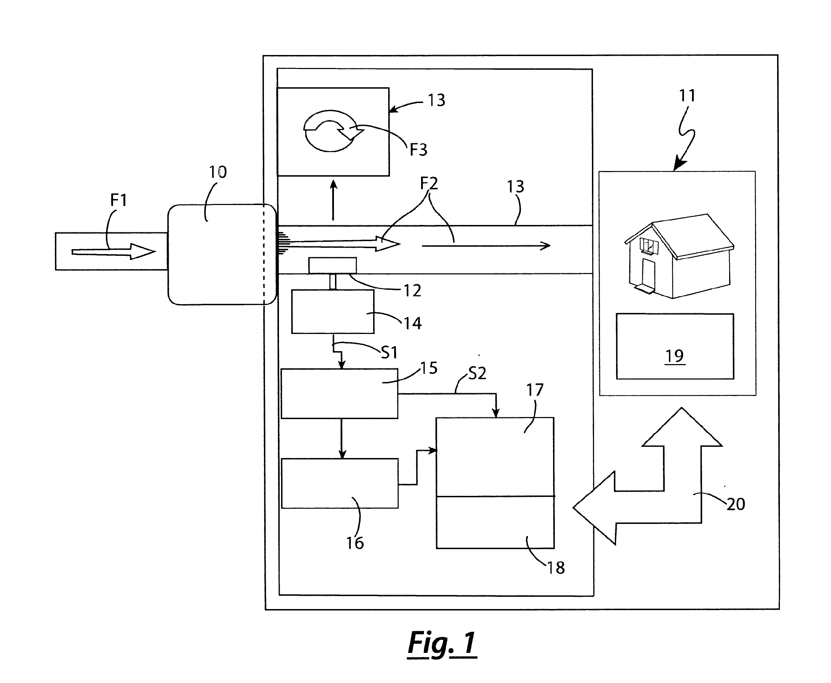

With particular reference to the above mentioned figure 1, which refers to a device, according to the present invention, for detecting water leakages, 10 generally indicates a standard water meter of a civil or industrial plant with an input water flow F1 and an output water flow F2, which is placed inside the pipeline or conduit 13 and which is directed towards a general user 11.

According to the invention, a charging device 12 is inserted inside the pipeline 13 and is connected to a coil 14, from which an AC electrical signal S1, generated by induction, is taken; said signal S1 is suitably treated in an adjusting and charging circuit 15, in order to have a signal S2 able to show that water flow is present inside the pipeline 13.

In particular, the water flow F2 which is present inside the pipeline 13 rotates (sign F3 of figure 1) the charging device 12, which, according to a preferred embodiment, includes a rotating magnet, which generates an electromagnetic field inside the coil 14.

Furthermore, the adjusting and charging circuit 15 is connected to a rechargeable battery 16, which provides power to an electronic control circuit 17 with low power consumption, which reads the signal S2 coming from the charging device.

The electronic control circuit 17, which is powered by the battery 16, scans the received data and is coupled with a transmitting device 18, which sends, via a wireless or terrestrial link 20, an alarm signal to a receiving device 19 installed inside the user 11 (the user 11 can be constituted by a housing unit or by a control central unit).

The magnetic charging device 12 therefore uses the water flow inside the pipeline 13 (flow F2) to recharge the battery 16 and to generate the electrical signal S2, which indicates the presence of the water flow F2 (self-powered system); moreover, the battery 16 is used for powering the electronic circuit 17, able to receive the electrical signal S1 coming from the charging device 12, which is adjusted by means of the circuit 15 and then converted into the electrical signal S2.

The electronic control circuit 17 is also programmed to send an alarm signal to the receiving device 19 when a water flow F2 is continuously detected for a time period exceeding a threshold time period which can be set by a user.

It is thus possible to alert the user, who can verify the presence of water leakages and act accordingly.

Finally, the receiving device 19 can be equipped both with a sound device and with a visual device for signaling an alarm and can be powered both with batteries and with the power supply of the building in which the user 11 is installed.

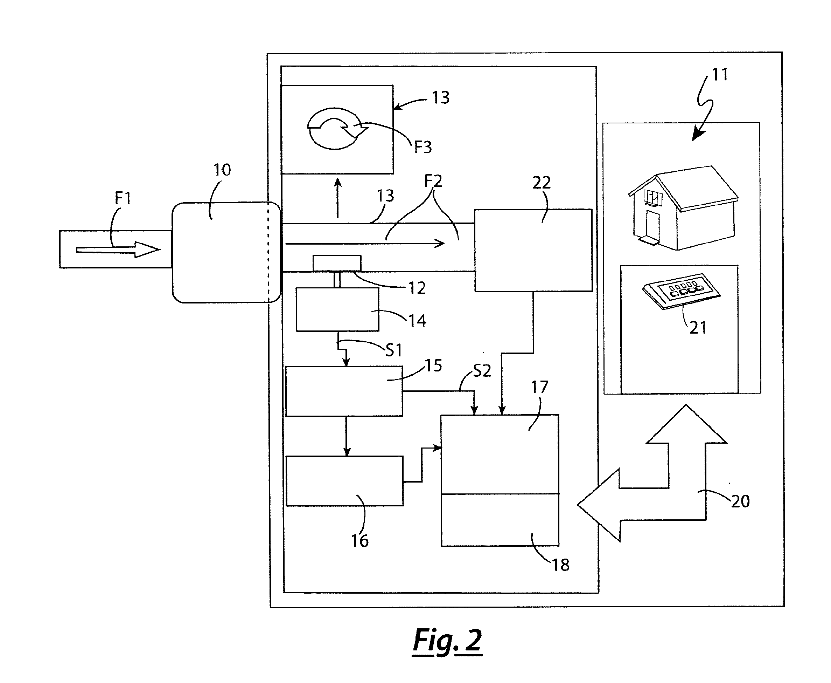

With particular reference to the appended figure 2, where the components having the same features and functions as those of figure 1 have the same reference numbers, the detecting device according to the present invention works as a self-powered system both for detecting the water leakages and for measuring the water consumptions.

In this case, the charging device 12 uses the water flow (flow F2) inside the pipeline 13 to recharge the battery 16 and to generate an electrical signal S1, which is suitably adjusted (signal S2) for showing the presence of the water flow F2; moreover, similarly to what described above, the battery 16 is used to supply the low consumption electronic control circuit 17.

In particular, according to this embodiment of the detection device of the present invention, the electronic control circuit 17 is also connected to a flow sensor 22, which measures the instantaneous water flow flowing inside the pipeline 13.

Thus, using the data coming from the flow sensor 22, the electronic control circuit 17 may be programmed to send to the electronic receiving device 21, which is installed at the user 11, the data related to the actual consumption of water, as well as to inform the user, by means of a data analysis algorithm able to detect atypical consumptions, about any leakages of the pipelines 13.

The receiving device 21 can be equipped with a sound and/or a visual device for signaling any alarm and/or for displaying the actual water consumption; said receiving device 21 can also be connected to a microprocessor able to store the consumption data in order to carry out any subsequent consumptions analysis.

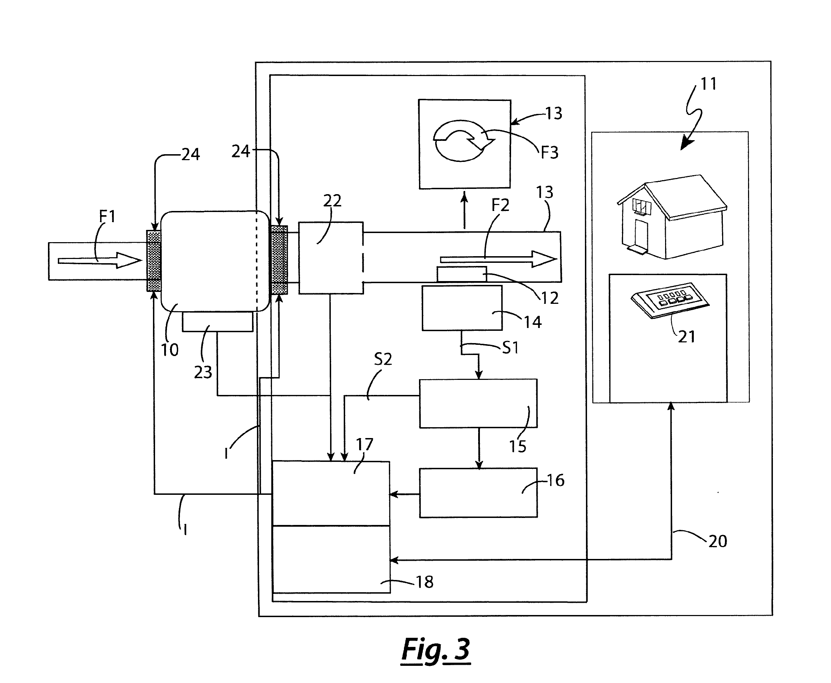

Finally, with particular reference to the appended figure 3, where the components having the same features and functions as those of the appended figures 1 and 2 show the same reference numbers, the detection device according to the present invention works as a self-powered system for detecting the water leakages, for measuring the water consumption and for avoiding freezing of the water meter.

In this particular embodiment of the present invention, the detection device has the sensor 22 for measuring the water flow F2 (the flow sensor 22) and is also equipped with an environment temperature sensor 23, connected to the water meter 10, and with heated resistive bands 24, which also contacts the standard water meter 10.

Thus, when the temperature sensor 23 detects environmental temperatures that are too low for a time period exceeding a predetermined threshold (temperatures that could lead to the freezing of the water meter 10 and to its relative damage), the energy stored in the battery 16 is used by the electronic control circuit 17 to generate a suitable electrical current I, which flows within and through the heated bands 24 so as to maintain the water meter 10 to a proper operating temperature.

The energy stored in the battery 16 through the charging device 12 may also be used to heat the water meter 10 and thereby to avoid possible freezing of the water meter 10 and its damage.

It is therefore clear from the above description that the technical characteristics of the self-powered device for detecting water leakages in the pipelines of civil and industrial plants, which is the object of the present invention, achieve the objects of the invention and give numerous, important and clear advantages, such as those mentioned above and, in particular, to quickly and simply detect the presence of water leakages in the pipelines of the water plants.

Also, although the water leakages detection device according to the invention has been described in the application with reference to a portion of a pipeline, it is clear for a skilled in the art that the application of the device may be extended for simultaneously scanning a plurality of pipelines of a same water plant or system.

Finally, it is also clear that variations may be made to the detection device of the invention, without departing from the scope of the appended claims, as it is clear that in the practical implementation of the invention, the materials, shapes and dimensions of the technical details illustrated may be any according to requirements and they can be replaced with other technically equivalent.

## Claims

1. A self-powered device for detecting water leakages in the pipelines of civil and industrial plants, **characterized in that** said device comprises at least one recharging magnetic element (12), which is inserted inside at least one portion of a conduit or pipeline (13) located downstream of a water meter (10) of a civil or industrial waterworks and connected to at least one user (11) of the plant, such as a home unit or a control unit, said water meter (10) being traversed by a first input water flow (F1) and by a second output water flow (F2), said recharging magnetic element (12) being also connected to a coil (14), from which an electrical signal (S1), which is generated by induction, is taken, said electrical signal (S1) being used to indicate the presence of said second water flow (F2) exiting the water meter (10) and directing towards the user (11).

2. A seif-powered detecting device according to claim 1, **characterized in that** said electrical signal (S1) is sent to a matching and charging circuit (15), connected to a rechargeable battery (16), which provides power to an electronic control circuit (17), said electronic control circuit (17) being able to process an electrical signal (S2) coming from said matching and charging circuit (15).

3. A self-powered detecting device according to at least one of the previous claims, **characterized in that** said recharging element (12) is constituted by a rotary magnet (F3), which is traversed by said second water flow (F2) flowing from said water meter (10), thus generating an electromagnetic field within said coil (14), so as to recharge said battery (16).

4. A self-powered detecting device according to at least one of the previous claims, **characterized in that** said electronic control circuit (17) is connected with a transmitting module (18), which sends, via a wireless or terrestrial link (20), an alarm signal to a receiver circuit (19), installed within said user (11), in case it detects that said second water flow (F2) is continuous for a time interval which is greater than a prefixed value.

5. A self-powered detecting device according to at least one of the previous claims, **characterized in that** said electronic control circuit (17) is connected to at least one flow sensor (22), which measures the instantaneous flow of water of said second water flow (F2) flowing within said pipeline (13).

6. A self-powered detecting device according to at least one of the previous claims, **characterized in that** said electronic control circuit (17) sends to an electronic receiving circuit (21), which is installed within said user (11), data relating to the water consumption.

7. A self-powered detecting device according to at least one of the previous claims, **characterized in that** at least one environment temperature sensor (23) is connected to said water meter (10).

8. A self-powered detecting device according to at least one of the previous claims, **characterized in that** resistive heating bands (24) are placed in contact with said water meter (10).

9. A self-powered detecting device according to at least one of the previous claims, **characterized in that** said electronic control circuit (17) generates an electric current (I), through said battery (16), which flows within said heating bands (24) when said temperature sensor (23) detects values of environment temperature which are lower than a prefixed value and for a time interval which is greater than a prefixed value, so as to avoid a possible freezing and relative damages of said water meter (10).
